# EUROPEAN PATENT APPLICATION

(11) **EP 4 852 309 A1**
(43) Date of publication of application: **09.12.2026**
(21) Application number: 24921880.1
(22) Date of filing: 29.01.2024
(51) Int. Cl.: H02S 20/00, F24S 25/636, F24S 25/67, E04F 13/26

(54) **CLAMP FOR PANELS**

(71) Applicant: C3 Systems, S.L., 03203 Elche (Alicante) (ES)
(72) Inventor: PLATA CARRETERO, David, 03203 ELCHE (Alicante) (ES)
(74) Representative: Martinez, Alicia
(86) International application number: PCT/ES2024/070046
(87) International publication number: WO 2025/163213

(57) **Abstract**

A clamp for panels whose manufacture and assembly are straightforward, comprising a lower clamping piece, an upper clamping piece, and fastening means between the two pieces; the lower clamping piece comprising a first base and a first longitudinal wall and a second longitudinal wall extending parallel to each other in a centred manner; the upper clamping piece comprising a second base and a third longitudinal wall and a fourth longitudinal wall extending parallel to each other in a centred manner; the lower clamping piece and the upper clamping piece being identical pieces arranged such that the third longitudinal wall is arranged parallel to the first longitudinal wall in the same way that the fourth longitudinal wall is parallel to the second longitudinal wall, whereby the lower clamping piece and the upper clamping piece face each other.

## Description

### TECHNICAL FIELD OF THE INVENTION

The present invention falls within the field of panel support structures, in particular, panel clamps.

### BACKGROUND OF THE INVENTION

Photovoltaic panels, as well as solar thermal panels or hybrid panels, are fixedly positioned on the element on which they are to be placed. Said element is typically horizontal, such as a floor or a flat roof, or has a certain incline, such as a pitched roof or an inclined roof. The fixed positioning is intended to be as simple and lightweight as possible, such that it is common to use clamps which grip the panels and are fixed directly to the element on which the panels are placed, or which include a support structure to be fixed to said element. The panels considered herein and throughout the present document may be of any type, whether glazing panels or the aforementioned photovoltaic, solar thermal, or hybrid panels.

Clamps consisting of two profile-shaped parts that grip the panel are known, both parts being different from one another, such that two distinct parts must be manufactured and care must be taken during assembly to place them in their correct positions, as in the Würth clamps known as "grapa interlamclic alu zebra" (https://www.wurth.es/grapa-interlamclic-alu-zebra) and "grapa intermedia alu solar 35-40" (https://www.wurth.es/grapa-intermedia-alu-solar-35-40-10).

Utility models with publication numbers ES1291414 and ES1204737 show more complex clamps, with a greater number of parts and with the aforementioned differences between the upper and lower parts, which also gives rise to a disadvantage in their manufacture and assembly.

The Martigrap clamp known as "pinza sujeción inicio/final fotovoltaica" (https://martigrap.es/pinza-sujecion-inicio-final-fotovoltaica) shows a simple configuration in the form of a sheet bent at several points, which requires attention to be paid to its assembly position and, moreover, means that the lower surface of the panel is not held by the clamp itself, but must instead be clamped against the element on which the panel is placed.

Known panel securing clamps differ in their upper and lower parts, thereby complicating manufacture and rendering assembly relatively difficult.

### DESCRIPTION OF THE INVENTION

The present invention is set out and characterised in the independent claim, while the dependent claims describe further features thereof.

The object of the invention is a clamp for panels. The technical problem to be solved is to configure the clamp so as to overcome the disadvantages of the prior art, such that its manufacture and assembly are straightforward.

In view of the foregoing, the present invention relates to a clamp for panels comprising a lower clamping piece, an upper clamping piece, and fastening means between the two pieces; the lower clamping piece comprising a first base, a first longitudinal wall, and a second longitudinal wall; the first longitudinal wall and the second longitudinal wall extending parallel to each other towards the same side of the first base and centrally with respect thereto, such that a first flange is defined up to one end of the first base and a second flange is defined up to the opposite end of the first base. Similarly, the upper clamping piece comprises a second base, a third longitudinal wall, and a fourth longitudinal wall; the third longitudinal wall and the fourth longitudinal wall extending parallel to each other towards the same side of the second base and centrally with respect thereto, such that a third flange is defined up to one end of the second base and a fourth flange is defined up to the opposite end of the second base.

The lower clamping piece and the upper clamping piece are arranged such that the first longitudinal wall is aligned with the third longitudinal wall, the second longitudinal wall is aligned with the fourth longitudinal wall, a first panel can be arranged between the first flange and the third flange, a second panel can be arranged between the second flange and the fourth flange, and the fastening means are arranged between the first, second, third, and fourth longitudinal walls.

The clamp is characterised in that the lower clamping piece and the upper clamping piece are identical pieces and are arranged such that the third longitudinal wall is arranged parallel to the first longitudinal wall in the same way that the fourth longitudinal wall is parallel to the second longitudinal wall, whereby the lower clamping piece and the upper clamping piece face each other. Stated differently, the lower clamping piece and the upper clamping piece, which are themselves the same piece provided in duplicate, are then arranged facing each other approximately with respect to the mid-plane of the clamp, rotated 180° relative to one another, or with respect to the mid-plane of the first and second panels when arranged in the clamp.

The terms "longitudinal" and "transverse" as used in this document refer to the clamp in its final position of use, are not limiting, and serve to facilitate clarity in the description of the invention. The panels do not form part of the invention; they are included owing to their relationship with the clamp and because they assist in explaining it.

By configuring the clamp with two identical pieces, a single piece can be manufactured to make up each clamp, with the resulting advantages in terms of manufacturing moulds, parts reference management, and logistics.

Furthermore, since each clamp is formed by two identical clamping pieces, it is not necessary during assembly to determine which piece functions as the upper clamping piece and which as the lower clamping piece, as there is only one piece with no distinction between two different parts, thereby avoiding assembly errors and facilitating assembly operations.

Other advantages relating to the dependent claims are set out further below in the detailed description.

### BRIEF DESCRIPTION OF THE FIGURES

The present specification is complemented by a set of figures, illustrative of the preferred example, and in no way limiting of the invention.
Figure 1 shows a side view of a clamp according to the invention.
Figure 2 shows a cross-sectional view of the clamp of Figure 1 arranged on a support structure and gripping two panels.
Figure 3 shows a side view of a variant of the clamp of Figures 1 and 2, arranged on a support structure.
Figure 4 shows a perspective view of the clamp of Figure 3.

### DETAILED DESCRIPTION OF THE INVENTION

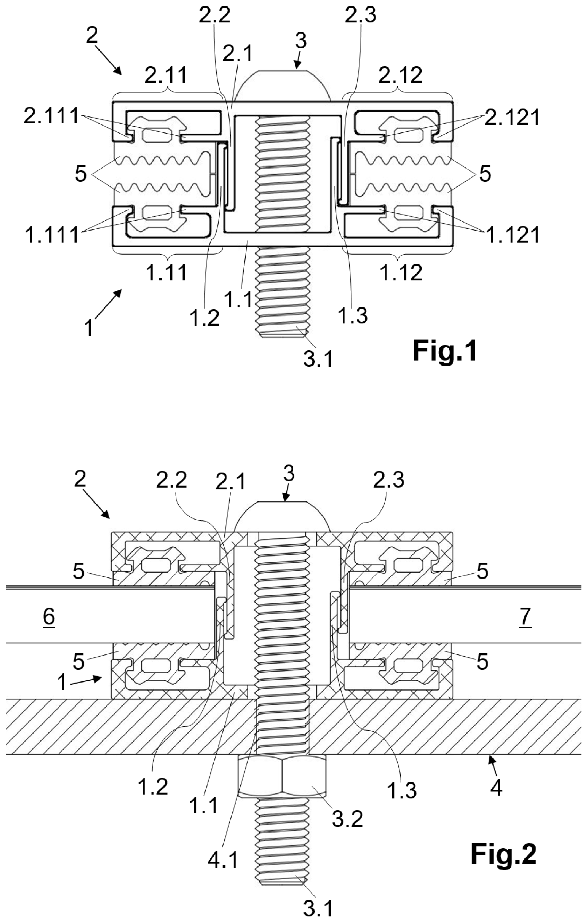

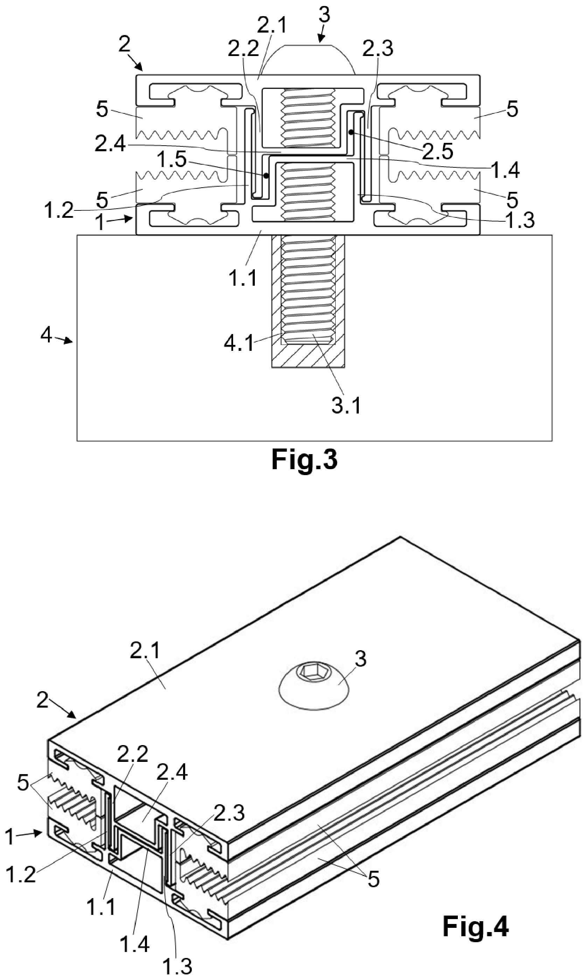

Figure 1 shows a clamp for panels according to the invention, with a lower clamping piece (1), an upper clamping piece (2), and fastening means (3) between the two pieces (1,2), the fastening means in the embodiment shown being a bolt, which can be fitted to a support structure (4), as shown in Figures 2 and 3 and described further below.

Continuing with the embodiment of Figure 1, the lower clamping piece (1) comprises a first base (1.1), a first longitudinal wall (1.2), and a second longitudinal wall (1.3); the first longitudinal wall (1.2) and the second longitudinal wall (1.3) extending parallel to each other towards the same side of the first base (1.1) and centrally with respect thereto, upwards according to the figure, such that a first flange (1.11) is defined up to one end of the first base (1.1), on the left in the figure, and a second flange (1.12) is defined up to the opposite end of the first base (1.1), on the right in the figure. The upper clamping piece (2) comprises a second base (2.1), a third longitudinal wall (2.2), and a fourth longitudinal wall (2.3); the third longitudinal wall (2.2) and the fourth longitudinal wall (2.3) extending parallel to each other towards the same side of the second base (2.1) and centrally with respect thereto, downwards according to the figure, such that a third flange (2.11) is defined up to one end of the second base (2.1), on the left in the figure, and a fourth flange (2.12) is defined up to the opposite end of the second base (2.1), on the right in the figure.

Continuing with the embodiment of Figure 1, the lower clamping piece (1) and the upper clamping piece (2) are arranged such that the first longitudinal wall (1.2) is aligned with the third longitudinal wall (2.2), the second longitudinal wall (1.3) is aligned with the fourth longitudinal wall (2.3), a first panel (6), shown in Figure 2, can be arranged between the first flange (1.11) and the third flange (2.11), a second panel (7), shown in Figure 2, can be arranged between the second flange (1.12) and the fourth flange (2.12), and the fastening means (3) are arranged between the first (1.2), second (1.3), third (2.2), and fourth longitudinal walls (2.3). Figure 2 shows the same clamp as Figure 1, in cross-section; for clarity, not all elements are numbered, and it additionally shows the panels (6,7) and details the fastening means (3) and a support structure (4).

Continuing with the embodiment of Figure 1, the lower clamping piece (1) and the upper clamping piece (2) are identical pieces and are arranged such that the third longitudinal wall (2.2) is arranged parallel to the first longitudinal wall (1.2) in the same way that the fourth longitudinal wall (2.3) is parallel to the second longitudinal wall (1.3), whereby the lower clamping piece (1) and the upper clamping piece (2) face each other. In other words, in the embodiment shown, the third longitudinal wall (2.2) is positioned to the right of the first longitudinal wall (1.2) in the same manner as the fourth longitudinal wall (2.3) is positioned to the right of the second longitudinal wall (1.3), this arrangement resulting from the fact that the lower clamping piece (1) and the upper clamping piece (2) are identical and arranged facing each other, rotated through 180° relative to one another.

Figure 3 shows a variant of the clamp providing self-centring between the lower clamping piece (1) and the upper clamping piece (2), understood as meaning that both pieces are centred relative to each other by themselves, without any element external to them, in that a first transverse wall (1.4), horizontal in the embodiment shown, is arranged between the first longitudinal wall (1.2) and the second longitudinal wall (1.3) and connected thereto, and a second transverse wall (2.4), horizontal in the embodiment shown, is arranged between the third longitudinal wall (2.2) and the fourth longitudinal wall (2.3) and connected thereto, such that the first transverse wall (1.4) creates a first recess (1.5) in which one end of the third longitudinal wall (2.2) is arranged and the second transverse wall (2.4) creates a second recess (2.5) in which one end of the second longitudinal wall (1.3) is arranged, whereby the aforementioned self-centring between the lower clamping piece (1) and the upper clamping piece (2) takes place. The clamp of Figure 3 is shown in perspective in Figure 4. Aside from the elements added in the variant, all other elements of the clamp of Figures 3 and 4 are the same as those of Figures 1 and 2; for clarity, only some are indicated in said Figures 3 and 4.

One option indicated in Figure 1 is that the first flange (1.11), the second flange (1.12), the third flange (2.11), and/or the fourth flange (2.12) respectively include first tabs (1.111), second tabs (1.121), third tabs (2.111), and fourth tabs (2.121) in which a gasket (5) for fitting and cushioning against the first panel (6) and/or the second panel (7) is arranged. This creates an effective way of achieving robust and straightforward mechanical anchoring of the gasket (5), normally of a felt or elastomer type.

One option shown in Figures 1 to 3 is that the fastening means (3) include a bolt (3.1), the shank of which passes through the clamp. Figures 2 and 3 show that the lower (1) and upper (2) clamping pieces include through-holes for the passage of the shank. This is an exemplary embodiment, in which the hole may not be a through-hole, or the holes may be omitted entirely, the screw being self-tapping.

Another option is that the fastening means (3) are fixed to a support structure (4). In Figure 2, the support structure (4) includes a through-hole (4.1), such that a nut (3.2) serves to secure the clamp. In Figure 3, the support structure (4) includes a blind hole (4.1), such that the clamp is secured by push-fit retention. These are merely two illustrative approaches, since any other known method of securing is possible. Likewise, the support structure (4) may refer to the element on which the clamp is placed, such as a roof, or may be a piece added to the clamp assembly and subsequently fixed to the element on which the clamp-and-support assembly is to be placed.

All the figures show the longitudinal walls (first (1.2), second (1.3), third (2.2), and fourth (2.3)) with a thickening at their ends, which advantageously provides provisional retention, preventing separation of the lower (1) and upper (2) clamping pieces of the clamp during assembly and until the tightening means (3) grip the panels (6,7).

Normally, the lower clamping piece (1) and the upper clamping piece (2) are made of a metal material, in particular of aluminium, and manufactured by extrusion, although any other material is possible and any other manufacturing method is applicable.

## Claims

1. A clamp for panels comprising a lower clamping piece (1), an upper clamping piece (2), and fastening means (3) between the two pieces (1,2); the lower clamping piece (1) comprising a first base (1.1), a first longitudinal wall (1.2), and a second longitudinal wall (1.3); the first longitudinal wall (1.2) and the second longitudinal wall (1.3) extending parallel to each other towards the same side of the first base (1.1) and centrally with respect thereto, such that a first flange (1.11) is defined up to one end of the first base (1.1) and a second flange (1.12) is defined up to the opposite end of the first base (1.1); the upper clamping piece (2) comprising a second base (2.1), a third longitudinal wall (2.2), and a fourth longitudinal wall (2.3); the third longitudinal wall (2.2) and the fourth longitudinal wall (2.3) extending parallel to each other towards the same side of the second base (2.1) and centrally with respect thereto, such that a third flange (2.11) is defined up to one end of the second base (2.1) and a fourth flange (2.12) is defined up to the opposite end of the second base (2.1); the lower clamping piece (1) and the upper clamping piece (2) being arranged such that the first longitudinal wall (1.2) is aligned with the third longitudinal wall (2.2), the second longitudinal wall (1.3) is aligned with the fourth longitudinal wall (2.3), a first panel (6) can be arranged between the first flange (1.11) and the third flange (2.11), a second panel (7) can be arranged between the second flange (1.12) and the fourth flange (2.12), and the fastening means (3) are arranged between the first (1.2), second (1.3), third (2.2), and fourth longitudinal walls (2.3); said clamp being **characterised in that** the lower clamping piece (1) and the upper clamping piece (2) are identical pieces and are arranged such that the third longitudinal wall (2.2) is arranged parallel to the first longitudinal wall (1.2) in the same way that the fourth longitudinal wall (2.3) is parallel to the second longitudinal wall (1.3), whereby the lower clamping piece (1) and the upper clamping piece (2) face each other.

2. The clamp according to claim 1, in which a first transverse wall (1.4) is arranged between the first longitudinal wall (1.2) and the second longitudinal wall (1.3) and connected thereto, a second transverse wall (2.4) is arranged between the third longitudinal wall (2.2) and the fourth longitudinal wall (2.3) and connected thereto, such that the first transverse wall (1.4) creates a first recess (1.5) in which one end of the third longitudinal wall (2.2) is arranged, and the second transverse wall (2.4) creates a second recess (2.5) in which one end of the second longitudinal wall (1.3) is arranged, whereby self-centring takes place between the lower clamping piece (1) and the upper clamping piece (2).

3. The clamp according to claim 1, in which the first flange (1.11), the second flange (1.12), the third flange (2.11), and/or the fourth flange (2.12) respectively include first tabs (1.111), second tabs (1.121), third tabs (2.111), and fourth tabs (2.121) in which a gasket (5) for fitting and cushioning against the first panel (6) and/or the second panel (7) is arranged.

4. The clamp according to claim 1, in which the fastening means (3) include a bolt (3.1), the shank of which passes through the clamp.

5. The clamp according to claim 1, in which the fastening means (3) are fixed to a support structure (4).
